# EUROPÄISCHE PATENTSCHRIFT

(11) **EP 2 582 995 B1**
(45) Veröffentlichungstag und Bekanntmachung des Hinweises auf die Patenterteilung: **27.01.2016**
(21) Anmeldenummer: 11726131.3
(22) Anmeldetag: 14.06.2011
(51) Int. Cl.: F16D 65/092, F16D 65/14, F16D 65/56

(54) **SCHEIBENBREMSE IN HYDRAULISCHER SELBSTVERSTÄRKENDER BAUART MIT PARKBREMSEINRICHTUNG**
DISC BRAKE OF HYDRAULIC SELF-ENERGIZING DESIGN WITH PARKING BRAKE DEVICE
FREIN À DISQUE DU TYPE À AUTO-RENFORCEMENT HYDRAULIQUE PRÉSENTANT UN SYSTÈME DE FREIN DE STATIONNEMENT

(30) Priorität: 17.06.2010 DE 102010024061
(43) Veröffentlichungstag der Anmeldung: 24.04.2013
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(74) Vertreter: Mattusch, Gundula
(86) Internationale Anmeldenummer: PCT/EP2011/059824
(87) Internationale Veröffentlichungsnummer: WO 2011/157698

(56) Entgegenhaltungen:
- WO-A1-2007/045430
- DE-A1-102006 057 442
- DE-B3-102008 061 347

## Beschreibung

Die Erfindung betrifft eine Scheibenbremse in hydraulischer selbstverstärkender Bauart mit Parkbremseinrichtung.

Eine Scheibenbremse mit elektromotorischem Aktuator in selbstverstärkender Bauart und bremseninterner Hydraulikanordnung ist in der Anmeldeschrift WO 2007/045430 A1 der Anmelderin beschrieben.

Eine gattungsgemäße Scheibenbremse geht aus DE-A-10 2006 057 442 hervor.

Eine Feststell- bzw. Parkbremseinrichtung einer derartigen Scheibenbremse benötigt einen relativ hohen Bauteileaufwand und damit verbundene Montage- und Justierzeit. Die Aufgabe der vorliegenden Erfindung besteht darin, eine Parkbremseinrichtung einer gattungsgemäßen Scheibenbremse zu verbessern.

Damit kann eine Parkbremseinrichtung realisiert werden, welche den Aufbau einer kompakten Scheibenbremse mit geringerer Teilezahl als im Stand der Technik ermöglicht.

Erfindungsgemäß wird diese Aufgabe mit den Merkmalen des Anspruchs 1 gelöst. Die Scheibenbremse ist mit einer Parkbremseinrichtung mit einer verstellbaren Schraubspindel zur Verstellung des zumindest einen Bremsbelags versehen. Dabei ist die Schraubspindel in besonders platzsparender Weise in den zumindest einen Zuspannzylinder integriert. Sie ist außerdem mit dem elektromotorischen Aktuator zum Antrieb koppelbar, wobei ein Tangentialkraftaufnahmezylinder hydraulisch mit einem Vorratskreis und einem Ausdehnungsgefäß verbindbar ist.

Eine Scheibenbremse in selbstverstärkender Bauart umfasst Folgendes: eine bremseninterne Hydraulikanordnung mit einem Vorratskreis und einem Ausdehnungsgefäß; eine Zuspannvorrichtung mit zumindest einem Zuspannzylinder zum Zuspannen zumindest eines Bremsbelages in Richtung einer Bremsscheibe; zumindest eine Kraftübertragungseinheit, welche den zumindest einen Bremsbelag unter einem Keilwinkel an der Zuspannvorrichtung abstützt; zumindest einen Tangentialkraftaufnahmezylinder zur Keilwinkelumschaltung, der mit der zumindest einen Kraftübertragungseinheit in Wirkungsverbindung steht; einen elektromotorischen Aktuator, welcher auf die Zuspannvorrichtung über die Hydraulikanordnung einwirkt; einen Verteilerzylinder zur Druckverstärkung, der zwischen dem elektromotorischen Aktuator und der Zuspannvorrichtung in Reihe angeordnet ist; und eine Steuereinheit, welche zur Steuerung der Keilwinkelumschaltung zwischen dem Tangentialkraftaufnahmezylinder und dem elektromotorischen Aktuator vorgesehen ist, weist eine Parkbremseinrichtung mit einer verstellbaren Schraubspindel zur Verstellung des zumindest einen Bremsbelags auf, wobei die verstellbare Schraubspindel mit dem elektromotorischen Aktuator zum Antrieb koppelbar ist, und wobei der zumindest eine Tangentialkraftaufnahmezylinder hydraulisch mit dem Vorratskreis und dem Ausdehnungsgefäß verbindbar ist.

Es ist außerdem vorgesehen, dass die zumindest eine Kraftübertragungseinheit mit dem zumindest einen Bremsbelag über eine keilförmige Auflagereinrichtung mit einer überkritischen Winkelform in Wirkverbindung steht. Dadurch ist sichergestellt, dass die Parkbremseinrichtung im zugespannten Zustand ohne hydraulische Einwirkung verbleiben kann und somit keine Energie zur Aufrechterhaltung dieses Zustands benötigt.

Somit ist es möglich, ebenfalls in platzsparender Weise ein Stellantriebsrad mit einem mit der Schraubspindel gekoppelten Wellenantriebsrad als einen hydraulischen Zahnradmotor auszulegen, welcher mit dem elektromotorische Aktuator hydraulisch über einen Hydraulikschalter koppelbar ist. Vorzugsweise ist der Hydraulikschalter von der Steuereinheit steuerbar.

Ein großer Vorteil besteht darin, dass der Antrieb der Parkbremseinrichtung hydraulisch erfolgt. Der Zahnradmotor kann flach ausgebildet sein und die Hydraulikleitungen können in das Gehäuse integriert werden.

Die Steuereinheit kann in einer bevorzugten Ausführung eine Steuerscheibe aufweisen, welche von dem elektromotorischen Aktuator über ein Umschaltventil hydraulisch von einem Steuerantrieb in Ausbildung als hydraulischer Zahnradmotor antreibbar ist. Auf diese Art ist es möglich, dass der elektromotorische Aktuator als Antrieb für unterschiedliche Aufgaben durch einfache Steuermittel verwendet werden kann. Er wirkt hier als Antriebsquelle für die Parkbremseinrichtung und die Steuereinrichtung zusätzlich zu seiner Funktion als Druckerzeuger für die Zuspannvorrichtung.

Die Parkbremseinrichtung kann mit einer Notlöseeinrichtung versehen sein, welche vorzugsweise mit dem Stellantriebsrad gekoppelt ist. Damit ist nicht nur im Notfall ein manuelles Lösen der Bremse möglich, sondern auch eine Rückstellung der Zuspannvorrichtung zum Beispiel bei einem Belagwechsel.

Für eine intelligente Nachführung bei Verschleiß der Bremsbeläge (und auch der Bremsscheibe) ist die Parkbremseinrichtung mit zumindest einem Geber ausgerüstet. Dieser kann z.B._in Form der Messung des aktuellen Füllstandes im Ausdehnungsgefäß ausgebildet sein. Dazu weist das Ausdehnungsgefäß einen geeigneten Füllstandsgeber, zum Beispiel einen Schwimmer in Verbindung mit einem elektrischen Signalgeber (kapazitiv, induktiv, ohm'scher Widerstand), auf. Die Nachführung eines aktuellen Nachstellwegs erfolgt automatisch immer nach dem Lösen der Feststellbremse, indem während des Lösens der Bremsbelag mittels Drehen der Spindeln in einem festgelegten Abstand zur Bremsscheibe angehoben wird. Anschließend wird mittels hydraulischer Betätigung der Zustellzylinder der Berührpunkt der Bremsbeläge an der Bremsscheibe erfasst und in einer Steuereinheit gespeichert. Als Wegsensor dient hierbei ebenfalls der Flüssigkeitspegel im Ausdehnungsgefäß. Das Bremssteuergerät kann auf diese Weise den Bremsbelag immer mit seinem erforderlichen Lüftspiel einstellen. Somit weist die Parkbremseinrichtung auch die Funktion einer Verschleißnachstellung auf. Der Umfang des Belagverschleißes kann durch Messen der verbliebenen Ölmenge im Ausdehnungsbehälter während nichtbetätigter Bremse gemessen werden.

Die Parkbremseinrichtung weist einen Nachstellkolben auf, der in dem Tangentialkraftaufnahmezylinder bei Nachführung des zumindest einen Bremsbelages hydraulisch verstellbar ist. Damit entsteht auf einfache Art eine Lageregelung für einen Aufnahmestufenkolben des Tangentialkraftaufnahmezylinders, so dass dieser trotz gelegentlicher Belagverschleißnachstellung dem Bewegungsablauf von Umlenkhebeln folgen kann, ohne durch seine mechanischen Anschläge behindert zu werden

Die Parkbremseinrichtung ist mittels des elektromotorischen Aktuators lösbar. Dabei entsteht gleichzeitig zum Einen über den Stufenkolben eine hohe hydraulisch erzeugte Zuspannkraft, während gleichzeitig zum Anderen der hydraulische Zahnradmotor ein Lösemoment der Schraubspindeln zum Lösen der Bremse erzeugt.

Weiterhin ist es von Vorteil, dass die mechanische Begrenzung der horizontalen Auslenkung des Bremsbelags infolge immer weiteren Zuziehens infolge überkritischen Keilwinkels zu einer hohen Bremskraft führt, welche aber gleichzeitig eine Überbeanspruchung vermeidet.

Nachfolgend wird die Erfindung anhand der in den schematischen Figuren der Zeichnung angegebenen Ausführungsbeispiele näher erläutert. Es zeigt dabei:
- Fig. 1: eine schematische Darstellung eines ersten Ausfühningsbeispiels einer erfindungsgemäßen Scheibenbremse;
- Fig. 2: eine schematische Teilschnittdarstellung eines zweiten Ausführungsbeispiels der erfindungsgemäßen Scheibenbremse in einer Normalstellung;
- Fig. 3: eine schematische Teilschnittdarstellung des zweiten Ausführungsbeispiels nach Fig. 2 in einer maximalen Bremszustellung;
- Fig. 4: eine schematische Teilschnittdarstellung des zweiten Ausführungsbeispiels nach Fig. 2 in einer Normalstellung mit maximalem Verschleiß;
- Fig. 5: eine schematische Perspektivansicht des zweiten Ausführungsbeispiels nach Fig. 2; und
- Fig. 6: eine schematische Perspektivansicht eines Ausschnitts aus Fig. 5;

Bauteile mit gleicher oder ähnlicher Funktion sind mit gleichen Bezugszeichen versehen, sofern nicht anders angegeben.

Mit dem Begriff "Öl" ist hier Hydraulikflüssigkeit gemeint.

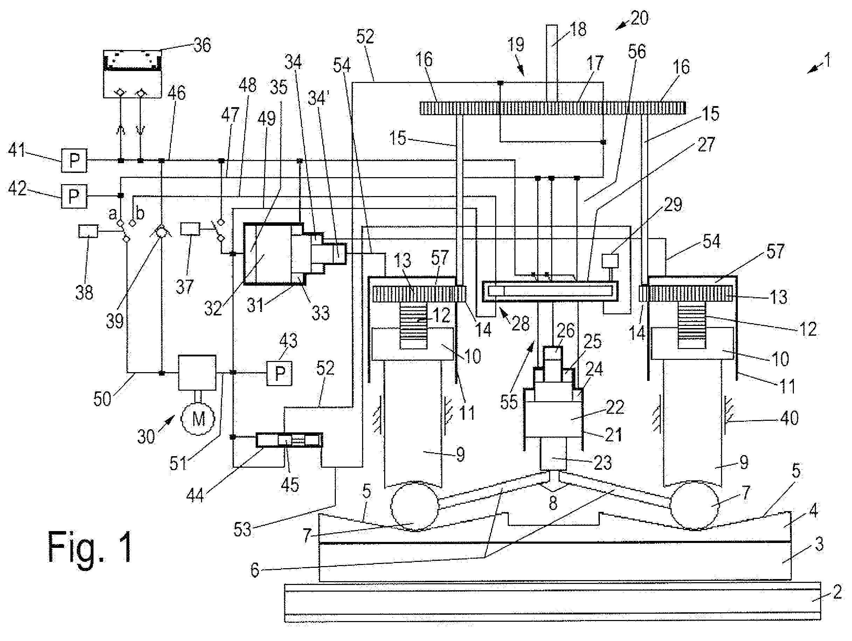

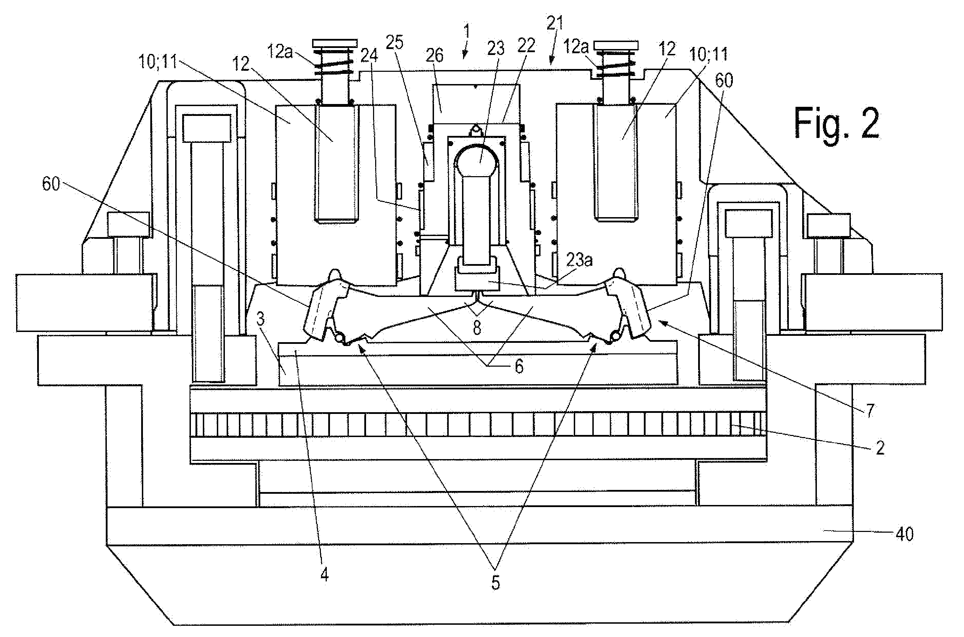

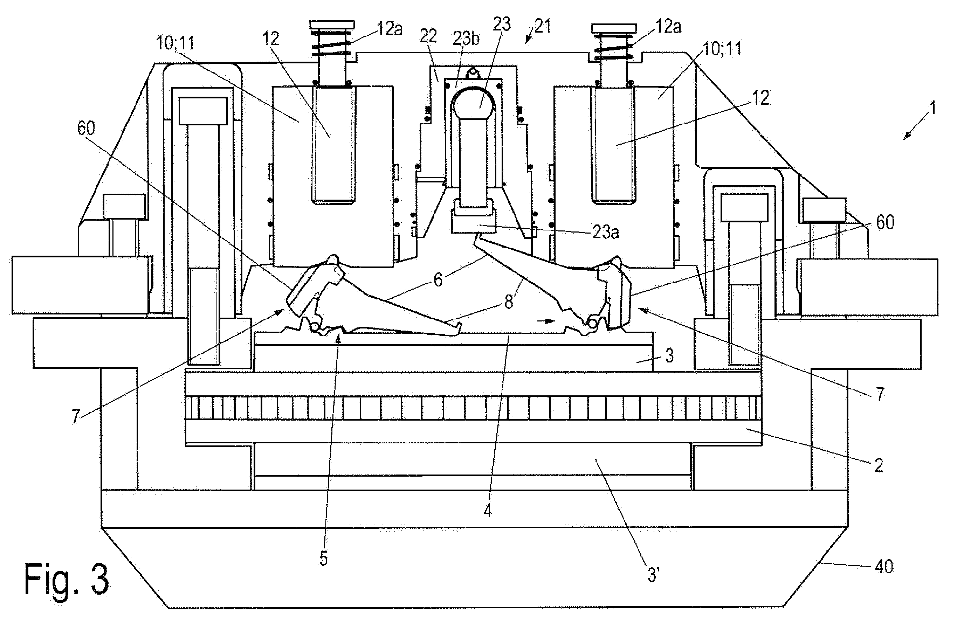

Fig. 1 ist eine schematische Darstellung eines ersten Ausführungsbeispiels einer erfindungsgemäßen Scheibenbremse 1. Fig. 1 wird im Zusammenhang mit Fig. 2 und Fig. 3 beschrieben. Fig. 2 zeigt eine schematische Teilschnittdarstellung eines zweiten Ausführungsbeispiels der erfindungsgemäßen Scheibenbremse in einer Normalstellung; und Fig. 3 illustriert eine schematische Teilschnittdarstellung des zweiten Ausführungsbeispiels nach Fig. 2 in einer maximalen Bremszustellung.

Die Scheibenbremse 1 weist einen Bremssattel 40 auf, welcher eine Bremsscheibe 2 übergreift. Beiderseits der Bremsscheibe 2 ist jeweils ein Bremsbelag 3, 3' mit Bremsbelagträger 4 angeordnet, wobei der in Fig. 2 unten gezeigte Bremsbelag 3' (nicht in Fig. 1 dargestellt) am Bremssattel 40 anliegt und der andere Bremsbelag 3 mit einer Zuspannvorrichtung in Wirkverbindung steht. Die Achse der Bremsscheibe 2 ist nicht gezeigt und verläuft, wie leicht vorstellbar ist, vertikal nach oben unterhalb der Bildebene. Eine Vorwärtsbewegung eines Fahrzeugs, welchem die Scheibenbremse 1 zugeordnet ist, soll in den Fig. 1 bis 3 nach links verlaufen, wobei sich die Bremsscheibe 2 dann nach links dreht.

Der Belagträger 4 ist hier mit zwei keilförmigen Auflagereinrichtungen 5 ausgebildet, wobei sie unter einem Keilwinkel an der Zuspannvorrichtung abgestützt sind, mit welcher sie jeweils über eine Kraftübertragungseinheit 7 mit jeweils einem Zuspannelement 9 in Wirkverbindung stehen. Die keilförmigen Auflagereinrichtungen 5 sind jeweils mit einem überkritischen Winkel ausgebildet.

Die Zuspannelemente 9 sind an ihrem oberen Ende jeweils mit einem Zuspannkolben 10 eines Zuspannzylinders 11 verbunden. Die Zuspannzylinder 11 sind so nebeneinander angeordnet, dass eine gleichmäßige Anpressung der Bremsbeläge 3, 3' an die Bremsscheibe 2 beim Zuspannen erfolgen kann.

In die Zuspannkolben 10 ist jeweils in Längsrichtung eine Schraubspindel 12 mit Gewinde eingeschraubt. Die Schraubspindeln 12 sind an ihren oberen Enden jeweils mit einem Schraubspindelrad 13 versehen, wobei jedes Schraubspindelrad 13 mit einem Ritzel 14 in Eingriff steht. Die Ritzel 14 sind jeweils über Stellwellen 15 mit Stellwellenrädern 16 drehfest verbunden, welche gemeinsam mit einem Stellantriebsrad 17 in Eingriff sind. Die Stellantriebsräder 16, 17 sind zum Beispiel als hydraulisch betriebenen Zahnradmotor 19 ausgebildet und hier mit einer Notlöseeinrichtung 18 ausgerüstet, welche zur Betätigung des Stellantriebsrads 17 zum Beispiel mittels eines Werkzeugs verstellbar ist. Die Stellräder 13, 14, 16 und 17 weisen zum Beispiel Verzahnungen auf und werden zur Parkbremszustellung verwendet, was weiter unten noch näher erläutert wird. Die Stellräder 13, 14, 16 und 17, die Notlöseeinrichtung 18, die Stellwellen 15 und der Zahnradmotor 19 bilden zusammen mit den Schraubspindeln 12 und weiteren Funktionselementen eine Parkbremseinrichtung 20 der Scheibenbremse 1. Weitere Funktionselemente der Parkbremseinrichtung sind ein Hydraulikschalter 44 und ein Steuerabschnitt einer Steuereinheit 27.

Rückholfedern 12a sind jeweils zwischen Bremssattel 40 und Schraubspindeln 12 in Längsrichtung der Schraubspindeln 12 angeordnet und ziehen den Bremsbelag 3, 3' von der Bremsscheibe 2 in der in Fig. 2 gezeigte Normalstellung auf ein bestimmtes so genanntes Lüftspiel zurück. Weitere Federn (nicht dargestellt) sind zum Zusammenhalten von Zuspannkolben 10 und Bremsbelag 3 vorgesehen

Die Kraftübertragungseinheiten 7 weisen jeweils einen Umlenkhebel 6 auf, wobei sich die Umlenkhebel 6 gegenüberstehen und Druckabschnitte 8 mit einem Stößel 23 eines Tangentialkraftaufnahmezylinders 21 in Wirkverbindung stehen. Der Stößel 23 ist hier Teil eines Aufnahmestufenkolbens 22, der mit dem Tangentialkraftaufnahmezylinder 21 erste bis dritte Druckkammern 24, 25 und 26 festlegt.

Die Druckkammern 24, 25 und 26 sind jeweils über Zwischenleitungen 55 an eine Steuereinheit 27 angeschlossen, welche Bestandteil eines Hydrauliksystems der Scheibenbremse 1 ist. Dieses Hydrauliksystem wird nun anhand der Fig. 1 näher erläutert.

Ein elektromotorischer Aktuator 30, zum Beispiel ein Elektromotor mit einer Zahnradpumpe, ist über eine Pumpensaugleitung 50 mit einem Ansaugventil 39, zum Beispiel ein Richtungsventil, an einen Vorratskreis 46 angeschlossen. Der Vorratskreis 46 steht einerseits mit einem Ausdehnungsgefäß 36 und einem ersten Drucksensor 41 in hydraulischer Verbindung. Andererseits ist der Vorratskreis 46 über ein Löseventil 37 mit einer Pumpendruckleitung 51 des elektromotorischen Aktuators 30 verbindbar. Weiterhin ist der Vorratskreis 46 an die Steuereinheit 27 und eine Vordruckkammer 33 eines Verteilerzylinders 31 angeschlossen.

Der Vorratskreis 46 ist zum Beispiel mit einem Vorratsdruck von ca. 1 bis 4 bar beaufschlagt.

Der elektromotorische Aktuator 30 steht außerdem über die Pumpendruckleitung 51 mit einer Eingangsdruckkammer 35 des Verteilerzylinders 31 und dem Hydraulikschalter 44 in Verbindung. An die Pumpendruckleitung 51 schließt sich ferner eine Steuerantriebsdruckleitung 49 an, welche zu einem Steuerantrieb 28 der Steuereinheit 27 führt. Eine Steuerantriebsrückleitung 48 ist zwischen dem Steuerantrieb 28 und einer Stellung b eines Umschaltventils 38 angeschlossen. Eine hier geschlossene Stellung a des Umschaltventils 38 verbindet die Pumpenansaugleitung 50 mit einem Zwischenkreis 47, welcher sowohl an der Steuereinheit 27 über Verbindungsleitungen 56 angeschlossen ist. Ferner ist der Zwischenkreis 47 mit dem Zahnradmotor 19 der Parkbremseinrichtung 20 verbunden, wobei eine Zahnradmotordruckleitung 52 den Zahnradmotor 19 druckseitig mit dem Hydraulikschalter 44 verbindet. Der Hydraulikschalter 44 ist außerdem über eine Hydraulikschalter-Steuerleitung 53 mit der Steuereinheit 27 verbunden.

Die Steuereinheit 27 ist zum Beispiel eine tellerförmige verdrehbare Steuerscheibe mit Steuerbohrungen, welche unterschiedliche Funktionen der Scheibenbremse 1 in unterschiedlichen Betriebszuständen übernehmen und Steueraufgaben ausführen kann. Diese Steuerscheibe ist zum Beispiel mit einem hydraulischen Zahnradmotor als Steuerantrieb 28 gekoppelt. Die Steuerscheibe steht außerdem mit einem Steuermelder 29 in Wirkverbindung. Ein übergeordnetes, z. B. elektronisches Bremssteuergerät (nicht gezeigt) steuert und regelt die Bremsvorgänge und -zustände der Scheibenbremse 1. Dazu steuert es die Ventile 37 und 38, welche z. B. Elektromagnetventile sind, und den elektromotorischen Aktuator 30. Das Steuergerät kommuniziert auch mit dem ersten Drucksensor 41 sowie mit weiteren Drucksensoren, von denen ein zweiter Drucksensor 42 einen Druck im Zwischenkreis 46 ermittelt. Ein dritter Drucksensor 43 dient zur Druckermittlung eines Drucks in der Pumpendruckleitung 51, wobei dieser Druck bis zu 130 bar betragen kann. Ein Wegsensor (nicht gezeigt, aber leicht vorstellbar) ermittelt den Füllstatus im Ausdehnungsbehälter. Dieser Wegsensor kann zum Beispiel ein kapazitiver, induktiver oder ohm'scher Signalgeber sein. Mit dem Sensor kann im Ruhezustand der Bremse der Status des Belagverschleißes ermittelt werden. Während einer Bremsung kann mit diesem Sensor des Weiteren über den Weg des Zylinders 22 die horizontale Bewegung der Bremsbeläge 3 überwacht werden. Schließlich kann mit Hilfe der Plausibilität des Belagverschleißes auch ein eventueller Ölverlust erkannt werden. Dieser Wegsensor des Flüssigkeitsspiegels im Ausdehnungsbehälter kann somit zur Messung der Horizontalverstellung der Bremsbeläge, der Erkennung eines Hydraulikflüssigkeitsverlustes und zur Statuserfassung eines Bremsbelagverschleißes vorteilhaft verwendet werden.

Der Verteilerzylinder 31 weist einen Stufenkolben 32 zur Druckverstärkung, Synchronisation und gleichmäßigen Beaufschlagung der Zuspannzylinder 11 mit einem Zuspanndruck von bis ca. 250 bar auf. Dazu bildet der Stufenkolben 32 mit dem Zuspannzylinder 11 Hockdruckkammern 34, 34', welche jeweils über eine Hochdruckleitung 54 mit den Zuspannzylindern 11 in Verbindung stehen.

Die Scheibenbremse 1 ist eine hydraulische selbstverstärkende Scheibenbremse, deren Funktion nun erläutert wird.

Bei einem Bremsbeginn wird mittels des elektromotorischen Aktuators 30 über das Ansaugventil 39 Hydraulikflüssigkeit aus dem Vorratskreis 46 und dem Ausdehnungsgefäß 36 angesaugt. Dabei erhöht der elektromotorische Aktuator 30 den Druck in der Pumpendruckleitung 51, wodurch der Stufenkolben 32 des Verteilerzylinders 31 verstellt wird und die Zuspannzylinder 11 mit Druck beaufschlagt. Somit werden die Bremsbeläge 3, 3' gegen die Bremsscheibe 2 gedrückt, bis ein Selbstverstärkungsprozess eingeleitet ist.

Dabei verschiebt sich der Bremsbelag 3 aufgrund von Reibung in Fig. 3 nach links. Die linke Kraftübertragungseinheit 7 als Umlenkhebel 6 wird nach unten und die rechte Kraftübertragungseinheit 7 als weiterer Umlenkhebel 6 nach oben geschwenkt. Die Umlenkhebel 6 werden durch die so erzeugte Tangentialkraft verschwenkt. Der rechte Umlenkhebel 6 lenkt die Tangentialkraft in eine Vertikalkraft um, welche über seinen Druckabschnitt 8 auf den Stößel 23 des Tangentialkraftaufnahmezylinders 21 übertragen wird. Dabei dient eine Druckplatte 23a zur gleichmäßigen Kraftübertragung. Weitere Bremskräfte werden über die Kraftübertragungseinheit 7, hier diejenige auf der rechten Seite, über die Zuspannzylinder 11 in den Bremssattel 40 eingeleitet. Auf der linken Seite überträgt der Umlenkhebel 6 mit seinem zwischen dem Zuspannelement 9 und der Auflagereinrichtung 5 angeordneten Abschnitt die Zuspannkraft des linken Zuspannzylinders 11. Auf der rechten Seite übernimmt die Übertragung der Zuspannkraft des rechten Zuspannzylinders 11 ein Schulterelement 60 der rechten Kraftübertragungseinheit 7. Fährt das nicht gezeigte Fahrzeug rückwärts, kehrt sich der oben beschrieben Vorgang um, wie leicht zu verstehen ist, und der linke Umlenkhebel 6 überträgt die Tangentialkraft auf den Tangentialkraftaufnahmezylinder 21.

### Beschreibung der Übertragung horizontaler Bremskräfte:

Während der Bremsung teilen sich die durch Zuspannung entstehenden Bremskräfte auf die beidseitig der Bremsscheibe 2 angeordneten Bremsbeläge 3, 3' auf. Die Hälfte der Bremskraft entsteht dabei im nach links ausgeschwenkten Bremsbelag 3. Ein Teil dieser Bremskraft wird über die linke Kraftübertragungseinheit 7 übertragen. Ein weiterer Teil dieser Bremskraft wird über die rechte Kraftübertragungseinheit 7 übertragen. Da die Auflageeinrichtung 5 im Sinne der Selbstverstärkung einen überkritischen spitzen Winkel darstellt, würde der Bremsbelag nach links bis an seinen mechanischen Anschlag auslenken. Dieses wird jedoch verhindert, durch das Abstützen des rechten Umlenkhebels 6 am Stößel 23 und letztlich dem Aufnahmestufenkolben 23.

Die Steuerscheibe der Steuereinheit 27 wird dabei über den Steuerantrieb 28 so eingestellt, dass die Druckkammern 24, 25 und 26 des Tangentialkraftaufnahmezylinders 21 in 7 unterschiedlichen Kombinationen entweder mit dem Vorratskreis 46 und/oder mit dem Zwischenkreis 47, welcher über das Umschaltventil 38 mit der Pumpenansaugleitung 50 verbunden ist, verbindbar sind. Damit kann die Scheibenbremse 1 an einen momentanen Reibwert angepasst werden. Verschiedene, so genannte Keilwinkel, sind einstellbar, indem die wirksamen Flächen der drei Druckkammern 24, 25, 26 vorzugsweise im Verhältnis 2:1 und (damit 1/7, 2/7, 4,7) ausgebildet sind. Durch binäres Kombinieren der aktiven Flächen lassen sich 7 unterschiedlich große Wirkflächen dieses Stufenkolbens 22 herstellen. Messwerte zur Ermittlung des momentanen Reibwertes liefern die Drucksensoren 42, 43 unter Berücksichtigung der jeweils wirksamen Druckkammern 24, 25, 26. und weitere Parameter, z. B. aus einer Fahrzeugsteuerung. Der Tangentialkraftaufnahmezylinder 21 liefert somit einen Druck der zur Verstärkung des Drucks in der Pumpendruckleitung 50 über den Verteilerzylinder 31 auf die Zuspannzylinder 11 wirkt und damit die Pumpenleistung des elektromotorischen Aktuators 30 minimiert. Der Verteilerzylinder 31 kann zusammen mit den beiden Zuspannzylindern 11 deren Zustellbewegung synchronisieren, einen Schrägverschleiß der Bremsbeläge 3, 3' ausgleichen und ein Druckniveau zwischen dem Tangentialaufnahmezylinder 21 und dem Verteilerzylinder 31 im Zwischenkreis 46 senken. Dabei dient der Verteilerzylinder 31 als Druckverstärker für die Zuspannzylinder 11.

Die mechanische Begrenzung der horizontalen Auslenkung des Bremsbelags infolge immer weiteren Zuziehens führt infolge überkritischen Keilwinkels zu einer hohen Bremskraft, welche aber gleichzeitig eine Überbeanspruchung vermeidet.

Am Ende des Bremsvorgangs wird der elektromotorische Aktuator 30 ausgeschaltet und das Löseventil 37 eingeschaltet. Dadurch wird der Druck in der Pumpendnickleitung 51 abgebaut, wobei die Rückholfedern 12a bei nachlassendem Zuspanndruck in den Zuspannzylindern 11 den Bremsbelag 3 wieder in seine Normalstellung mit Lüftspiel zurückführen.

Das Löseventil 37 kann auch als Notlöseventil im Fehlerfall zur Lösung der Scheibenbremse 1 verwendet werden. Es ist zum Beispiel ein Magnetventil, welches stromlos offen ist.

Das Ausdehnungsgefäß 36 dient außerdem zur Aufnahme der Volumina der mit dem Vorratskreis 46 über die Steuereinheit 27 verbundenen Druckkammern 24, 25, 26 des Tangentialkraftaufnahmezylinders 21. Das Ausdehnungsgefäß 36 weist ferner Sensoren zur Ermittlung eines Hydraulikflüssigkeitsverlustes auf. Außerdem ist damit gleichzeitig eine Möglichkeit zur Erkennung eines Belagverschleißes der Bremsbeläge 3, 3' geschaffen.

Die Parkbremseinrichtung 20 wird benutzt, um ein Fahrzeug im Stillstand, z. B. beim Parken, mit angezogener Bremse festzustellen. Bei einem Parkbremsvorgang werden die Bremsbeläge 3, 3' an die Bremsscheibe 2 etwas vorgespannt angelegt und verbleiben in dieser so eingenommenen Stellung, wobei sie ihre Bremswirkung beibehalten, bis die Parkbremseinrichtung 20 wieder gelöst wird.

Zur Aktivierung des Parkbremsvorgangs wird zunächst ein Zustellen der Bremsbeläge 3, 3' über eine Verstellung der Schraubspindeln 12 durchgeführt. Dazu wird das Umschaltventil 38 in Stellung b umgeschaltet und der elektromotorische Aktuator 30 eingeschaltet. Dabei ist die Steuerantriebsrückleitung 48 mit der Pumpensaugleitung 50 verbunden und der hydraulische Zahnradmotor 28 der Steuereinheit 27 verstellt die Steuerscheibe derart, dass über die Hydraulikschalter-Steuerleitung 53 ein Schieber 45 des Hydraulikschalters 44, zum Beispiel durch den an ihm anstehenden Druck der mit ihm verbundenen Pumpendruckleitung 51, in eine Öffnungsstellung verschoben wird. Diese Öffnungsstellung des Schiebers 45 verbindet dann die Pumpendruckleitung 51 mit der Zahnradmotordruckleitung 52 und beaufschlagt den Zahnradmotor 19 der Parkbremseinrichtung 20 mit diesem Druck. Das Stellantriebsrad 17 verdreht somit die Schraubspindeln 12 über die Zahnräder 16, 14, 13, wodurch die Zuspannelemente 9 der Zuspannzylinder 11 in Richtung auf die Bremsscheibe 2 verstellt werden und die Bremsbeläge 3, 3' gegen die Bremsscheibe 2 gedrückt werden.

Weiterhin wird die Steuereinheit 27 so eingestellt, dass alle Druckkammern 24, 25, 26 des Tangentialkraftaufnahmezylinders 21 mit dem Vorratskreis 46 und mit dem Ausdehnungsgefäß 36 kommunizieren. Dadurch wird es möglich, dass beim Anlegen der Bremsbeläge 3, 3' die keilförmige Auflagereinrichtung 5 aufgrund ihrer überkritischen Winkel ein Selbstzuziehen der Bremse bewirkt. Die dabei mögliche Verschiebung des Bremsbelags 3, welche über die Umlenkhebel 6 auf den Tangentialaufnahmezylinder 21 übertragen wird, kann erfolgen, da dessen Druckkammern 24, 25, 26 mit dem Vorratskreis 46, der einen relativ geringen Druck aufweist, verbunden sind.

Wenn die Parkbremseinrichtung 20 auf diese Weise zugestellt ist, wird der elektromotorische Aktuator 30 ausgeschaltet, wobei der Hydraulikschalter 44 in seine Ausgangsstellung zurückgestellt wird. Bei einer Vorwärts- und Rückwärtsbeweglng des Fahrzeugs bei so zugestellter Parkbremseinrichtung 20 wird die Bremswirkung durch die keilförmige Auflagereinrichtung 5 noch zusätzlich verstärkt, so dass eine sichere Festsetzung des Fahrzeugs durch die Parkbremseinrichtung 20 ermöglicht ist. Auf diese Art und Weise ist die Parkbremseinrichtung 20 im zugestellten Zustand von der Hydraulik unabhängig.

Ein Lösen der Parkbremseinrichtung 20 erfolgt mit Unterstützung des elektromotorischen Aktuators 30, indem dieser zur Beaufschlagung des Verteilerzylinders 31 mit Druck zum Zustellen der Bremse eingeschaltet wird. Dies wirkt sich druckverstärkend auf die Zuspannkolben 10 aus. Gleichzeitig entsteht ein maximales Lösemoment am Zahnradmotor 19 zum Lösen der Parkbremseinrichtung 20 in umgekehrter Drehrichtung. Dies erfolgt durch den elektromotorischen Aktuator 30, gesteuert über den Hydraulikschalter 44 und die Steuereinheit 27. Damit erfolgt ein zuverlässiges Bremslösen auch einer maximal bis zu ihrem mechanischen Bewegungsanschlag zugespannten Bremse.

Die Parkbremseinrichtung 20 weist eine weitere Funktion einer Verschleißnachstellung auf. Bei einem erfassten Verschleiß, zum Beispiel durch das Ausdehnungsgefäß wie oben beschrieben wird bei einem bestimmten Verschleißwert vom Bremssteuergerät ein Nachstellvorgang zur Verschleißnachführung der Bremsbeläge 3, 3' aktiviert. Zur Verschleißnachstellung wird der Zahnradmotor 19 der Parkbremseinrichtung 20 wie oben beschrieben aktiviert. Das Stellantriebsrad 17 verdreht somit die Schraubspindeln 12 über die Zahnräder 16, 14, 13, wodurch die Zuspannelemente 9 der Zuspannzylinder 11 in Richtung auf die Bremsscheibe 2 verstellt werden und den ermittelten Verschleißweg des Bremsbelags 3 bzw. 3' nachstellen, bis das Lüftspiel des Normalzustands wieder hergestellt ist. Zur genauen Messung dieses Nachstellwegs können unterschiedliche Geber dienen, zum Beispiel Winkelgeber am Zahnradmotor 19. Dies kann zum Beispiel ein Mehrgangpotenziometer sein, dessen elektrischer Widerstand sich über einen Verdrehwinkel, der proportional zum Nachstellweg ist, proportional zum Nachstellweg verändert und somit ein Maß für den Nachstellweg bildet.

Der Nachstellvorgang wird, wenn das normale Lüftspiel erreicht ist, beendet, indem über das Umschaltventil 38 der Steuerantrieb 28 zur Ausschaltung des Hydraulikschalters 44 über die Hydraulikschalter-Steuerleitung 53 betätigt wird, wodurch der Zahnradmotor 19 ausgeschaltet wird, und dann der elektromotorische Aktuator 30 ausgestellt wird.

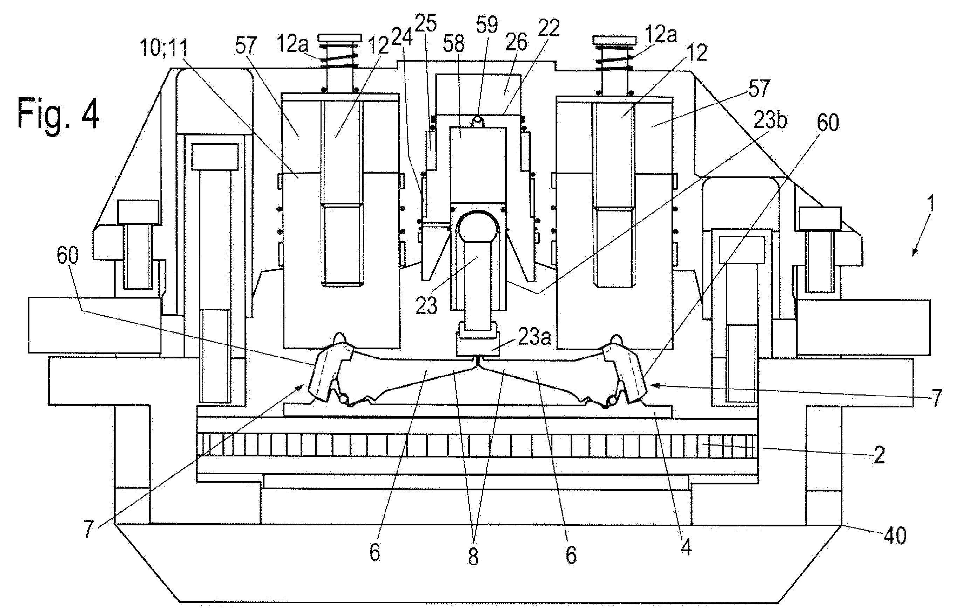

Fig. 4 zeigt eine schematische Teilschnittdarstellung des zweiten Ausführungsbeispiels nach Fig. 2 in einer Normalstellung mit maximalem Verschleiß der Bremsbeläge 3, 3'. Es ist deutlich zu sehen, dass die Zuspannkolben 10 in den Zuspannzylindern 11 durch die heraus geschraubten Schraubspindeln 12 nach unten in Richtung Bremsscheibe 2 verstellt sind. Dabei sind Zuspanndruckkammern 57 der Zuspannzylinder 11 mit Hydraulikflüssigkeit nachträglich angefüllt, um den Nachstellweg auszugleichen. Dies kann durch den Vorratskreis 46 erfolgen, welcher damit auch für ein Nachströmen neuen Öls über den Zeitraum des Belagverschleißens sorgt. Älteres Öl kann sich dabei in den Zuspannkammern 57 ansammeln. Außerdem hat die Verschleißnachstellung des Bremsbelages 3 zur Folge, dass die Umlenkhebel 6 mit ihren Druckabschnitten 8 ebenfalls um den Nachstellweg verstellt sind. Ohne einen Ausgleich dieses Nachstellwegs würde eine Funktion des Tangentialkraftaufnahmezylinders 21 nicht über den gesamten Nachstellweg möglich sein. Dazu ist der Aufnahmestufenkolben 22 des Tangentialkraftaufnahmezylinders 21 mit einem Nachstellkolben 23b versehen, welcher zwischen dem Stößel 23 und dem Aufnahmestufenkolben 22 in diesem koaxial verschiebbar angeordnet ist. Dieser Nachstellkolben 23b befindet sich in dem Aufnahmestufenkolben 22 und bildet mit diesem eine Nachstellkammer 58 welche über ein Richtungsventil 59 mit der dritten Druckkammer 26 des Tangentialkraftaufnahmezylinders 21 kommuniziert.

Die Nachstellung des Nachstellkolbens 23b verläuft ebenfalls über den Vorratskreis 46, indem über die Steuereinheit 27 die Druckkammern 24 bis 26 vom Vorratskreis 46 aufgefüllt werden. Dabei füllt sich auch die Nachstellkammer 58 über das Richtungsventil 59. Der Druck im Vorratskreis 46 muss hierzu ausreichend sein. Dieser Druck kann aber auch über zusätzliche Druckerhöhungsmaßnahmen mittels des elektromotorischen Aktuators 30 über zusätzliche Ventile und Regelungen erhöht werden, wobei der Nachstellweg des Nachstellkolbens 23b über geeignete Geber erfasst werden kann. Wird nun über den Stößel 23 beim Bremsvorgang Kraft auf den Nachstellkolben 23b eingeleitet, so kann die Hydraulikflüssigkeit in der Nachstellkammer 58 aufgrund des Richtungsventils 59 nicht entweichen. Bei einem Belagwechsel und Rückstellung der Parkbremseinrichtung 20 wird die Nachstellkammer 58 ebenfalls entleert, was zum Beispiel durch Öffnen des Richtungsventils 59 oder mittels eines Stifts, der zentrisch im Boden der Druckkammer 26 platziert ist, erfolgen kann. Dies wird im Folgenden erläutert.

Eine Nachstellung des Belagverschleißes erfolgt jeweils nach dem Lösen der Feststellbremse bzw. Parkbremse. Der Arbeitsraum der Zylinder des Aufnahmestufenkolbens 22, das heißt die Druckkammern 24, 25 und 26, ermöglicht einen etwas größeren Bewegungsweg als die Umlenkhebel 6 in ihrer maximalen Auslenkung dies erfordern. Damit kann sich der Nachstellkolben 23b automatisch einregeln. Zum Ausfahren des Kolbens 23b wird zusätzliches Öl durch das Richtungsventil 59 als Rückflussverhinderer in den Zylinderraum (Nachstellkammer 58) oberhalb des Nachstellkolbens 23b eingelassen. Dies geschieht, wenn mittels Spindeln 12 die Zuspannkolben 10 nach Ende der Park- bzw. Handbremsenbetätigung weiter in Richtung Bremsscheibe 2 verstellt wurden (wegen Belagverschleiß). Der Aufnahmestufenkolben 22 gelangt dadurch an seinen äußeren Bewegungsanschlag. Der hydraulische Druck im Nachstellkolben 23b, das heißt in der Nachstellkammer 58, sinkt ab, so dass sich das Richtungsventil 59 öffnet und Öl in die Nachstellkammer 58 einfließt.

Das umgekehrte Einfahren des Nachstellkolbens 23b erfolgt beim Wechsel der Bremsbeläge 3, 3' und/oder der Bremsscheibe 2. Dazu werden die Spindeln 12 durch den Zahnradmotor 19 hydraulisch derart betätigt, dass die Zuspannkolben 10 eingefahren werden. Damit wird auch der Aufnahmestufenkolben 22 eingefahren. Das Hydrauliköl oberhalb der Zuspannkolben 10 sowie des Aufnahmestufenkolbens 22 wird in das Ausdehnungsgefäß 36 gedrückt. Der Aufnahmestufenkolben 22 wird dabei soweit zurückgefahren, bis dessen Kolbenbodenfläche den Zylinderraumboden der dritten Druckkammer 26 berührt. Kurz vor diesem Berührpunkt drückt ein Stift (nicht dargestellt, aber leicht vorstellbar), welcher zentrisch im Boden der dritten Druckkammer 26 platziert ist, auf das Richtungsventil 59, so dass sich dieses öffnet und das in der Nachstellkammer 58 befindliche Öl über die dritte Druckkammer 26 in das Ausdehnungsgefäß 36 gedrückt wird. Damit entsteht auf einfache Art eine Lageregelung für den Aufnahmestufenkolben 22, so dass dieser trotz gelegentlicher Belagverschleißnachstellung dem Bewegungsablauf der Umlenkhebel 6 folgen kann, ohne durch seine mechanischen Anschläge behindert zu werden.

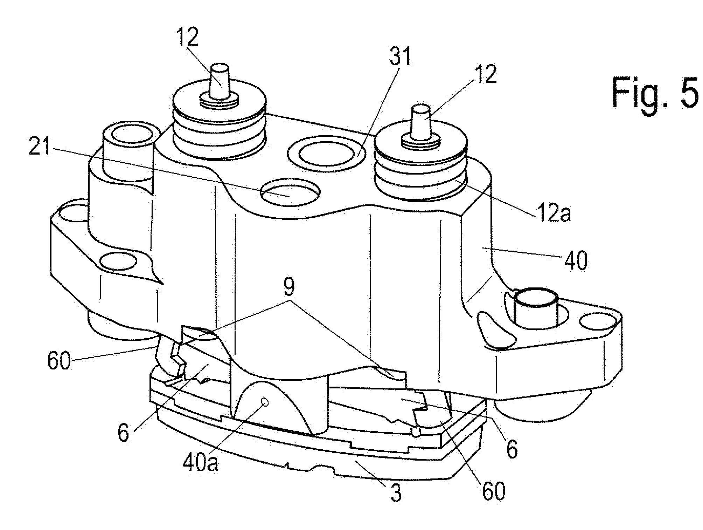

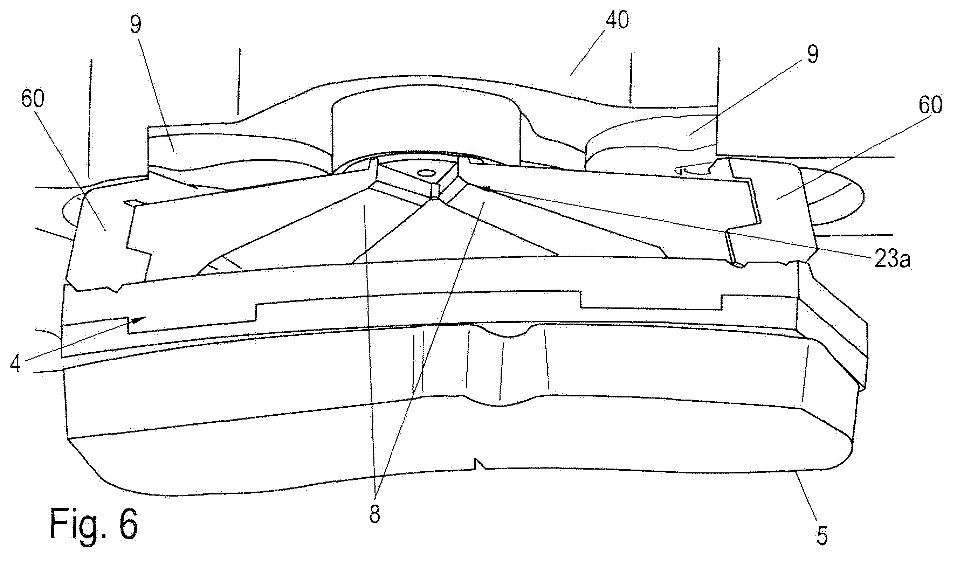

In Fig. 5 ist eine schematische Perspektivansicht des zweiten Ausführungsbeispiels nach Fig. 2 gezeigt; und Fig. 6 ist eine schematische Perspektivansicht eines Ausschnitts aus Fig. 5.

Fig. 5 zeigt einen Abschnitt des Bremssattels 40, in welchem hier alle Hydraulikkomponenten angeordnet sind. Zwischen den Zuspannzylindern 11, von denen hier die oberen Enden der Schraubspindeln 12 mit den Rückholfedern 12a zu sehen sind, sind der Tangentialkraftaufnahmezylinder 21 und der Verteilerzylinder 31 hintereinander angeordnet, wobei diese Zylinder 11, 21 und 31 im Wesentlichen alle parallel zueinander liegen. Im unteren Bereich, den Fig. 6 in einer anderen Perspektive darstellt, ist ein Anschlagelement 40a für den Tangentialkraftaufnahmezylinder 21 zwischen Bremssattel 40 und Belagträger 4 unterhalb des Tangentialkraftaufnahmezylinders 21 angeordnet. Neben dem Anschlagelement 40a kann zwischen den beiden Zuspannelementen 9 auch eine Feder zum Zusammenhalten der beiden Zuspannkolben 10 und des Bremsbelags 3 platziert werden. Der Bremsbelag 3 ist entsprechend der Bremsscheibe 2 kreisbogenförmig, wobei die Umlenkhebel 6 mit den Schulterelementen 60 zwischen Kolbenelementen 9 und der Auflagereinrichtung 5 angeordnet sind und die Druckabschnitten 8 radial nach außen weisen und an der Druckplatte 23a anliegen.

Die erfindungsgemäße Scheibenbremse 1 weist somit folgende Eigenschaften und Vorteile auf:
- Geringe elektrische Ansteuerleistung (zum Beispiel ca. 60 W bis max. 150 W)
- Hohe Energie- und Kraftdichte (180 kN Zustellkraft im Bauraum darstellbar)
- Automatische Selbstverstärkung in beide Fahrtrichtungen
- Robuste und einfache Parkbremsfunktion
- Einfache und zuverlässige Notlösefunktion durch stromlos offenes Magnetventil (Löseventil 37)
- Elektromotorischer Antrieb
- Kraftübertragung mittels hydraulischem Öl
- Hydraulikkomponenten sind zuverlässige und bekannte Standardtechnologie
- Kürzerer Bremsweg durch bessere ABS-Regelung (geringe zu beschleunigende Massen)
- Kurze Ansprech- und Verstellzeit (geringe zu beschleunigende Massen)
- Intelligente Verschleißnachstellung auch für rückseitige Beläge ohne zusätzlichen Motor
- Preisgünstige Zahnradpumpe anstelle teurem mechanischen Hochlastgetriebe
- Ein Elektromotor treibt über Zahnradpumpe
   - Bremszustellung
   - Steuereinheit (Ventilscheibe)
   - Parkbremseinrichtung sowie Verschleißnachstellung
- Einfache und präzise Kraftmessung mittels Drucksensoren
- Kompakte, leichte Bauweise, wenig empfindlich gegenüber Vibrationen
- Gute Gleit- und Schmiereigenschaften der Komponenten durch Verwendung von Hydrauliköl
- Robuste Regelung, da spielfrei, keine mechanischen Zahnradpaarungen zur Bremskraftübertragung sowie kein Kraftwechsel (immer mechanisch überkritischer Keilwinkel)
- Bei 3-stufigem Aufnahmestufenkolben ist Umschaltung zwischen 7 verschiedenen Keilwinkeln möglich
- Direkte Messung der Zuspannkraft sowie der Bremskraft möglich
- Genaue Messung bzw. Erfassung des Anlegepunkts/Reibepunkts der Bremsbeläge durch Differenzdruckmessung
- Messung des Belagverschleißes ohne zusätzliche Verschleißwegsensoren

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

Der Tangentialkraftaufnahmezylinder 21 kann mehr oder weniger Druckkammern 24 bis 26 aufweisen.

Die Steuereinheit 27 kann anstelle einer Steuerscheibe oder zusätzlich zu ihr auch Magnetventile aufweisen.

### Bezugszeichenliste

- 1: Scheibenbremse
- 2: Bremsscheibe
- 3, 3': Bremsbelag
- 4: Belagträger
- 5: Auflagereinrichtung
- 6: Umlenkhebel
- 7: Kraftübertragungseinheit
- 8: Druckabschnitt
- 9: Zuspannelement
- 10: Zuspannkolben
- 11: Zuspannzylinder
- 12: Schraubspindel
- 12a: Rückholfeder
- 13: Schraubspindelrad
- 14: Ritzel
- 15: Stellwelle
- 16: Stellwellenrad
- 17: Stellantriebsrad
- 18: Notlöseeinrichtung
- 19: Zahnradmotor
- 20: Parkbremseinrichtung
- 21: Tangentialkraftaufnahmezylinder
- 22: Aufnahmestufenkolben
- 23: Stößel
- 23a: Druckplatte
- 23b: Nachstellkolben
- 24: Erste Druckkammer
- 25: Zweite Druckkammer
- 26: Dritte Druckkammer
- 27: Steuereinheit
- 28: Steuerantrieb
- 29: Steuermelder
- 30: Pumpe
- 31: Verteilerzylinder
- 32: Stufenkolben
- 33: Vordruckkammer
- 34, 34': Hochdruckkammer
- 35: Eingangsdruckkammer
- 36: Ausdehnungsgefäß
- 37: Löseventil
- 38: Umschaltventil
- 39: Ansaugventil
- 40: Bremssattel
- 40a: Anschlagelement
- 41: Erster Drucksensor
- 42: Zweiter Drucksensor
- 43: Dritter Drucksensor
- 44: Hydraulikschalter
- 45: Schieber
- 46: Vorratskreis
- 47: Zwischenkreis
- 48: Steuerantriebsrückleitung
- 49: Steuerantriebsdruckleitung
- 50: Pumpensaugleitung
- 51: Pumpendruckleitung
- 52: Zahnradmotordruckleitung
- 53: Hydraulikschalter-Steuerleitung
- 54: Hochdruckleitung
- 55: Zwischenleitungen
- 56: Verbindungsleitungen
- 57: Zuspanndruckkammer
- 58: Nachstellkammer
- 59: Richtungsventil
- 60: Schulterelement

## Patentansprüche

1. Scheibenbremse (1) in selbstverstärkender Bauart, mit:
a) einer bremseninternen Hydraulikanordnung mit einem Vorratskreis (46) und einem Ausdehnungsgefäß (36);
b) einer Zuspannvorrichtung mit zumindest einem Zuspannzylinder (11) zum Zuspannen zumindest eines Bremsbelages (3, 3') in Richtung einer Bremsscheibe (2);
c) zumindest einer Kraftübertragungseinheit (7), welche den zumindest einen Bremsbelag (3, 3') unter einem Keilwinkel an der Zuspannvorrichtung abstützt;
d) zumindest einem Tangentialkraftaufnahmezylinder (21) zur Keilwinkelumschaltung, der mit der zumindest einen Kraftübertragungseinheit (7) in Wirkungsverbindung steht;
e) einem elektromotorischen Aktuator (30), welcher auf die Zuspannvorrichtung über die Hydraulikanordnung einwirkt;
f) einem Verteilerzylinder (31) zur Druckverstärkung, der zwischen dem elektromotorischen Aktuator (30) und der Zuspannvorrichtung in Reihe angeordnet ist;
g) einer Steuereinheit (27), welche zur Steuerung der Keilwinkelumschaltung zwischen dem Tangentialkraftaufnahmezylinder (21) und dem elektromotorischen Aktuator (30) vorgesehen ist, und
h) einer Parkbremseinrichtung (20) mit einer verstellbaren Schraubspindel (12) zur Verstellung des zumindest einen Bremsbelags (3, 3'), wobei die verstellbare Schraubspindel (12) mit dem elektromotorischen Aktuator (30) zum Antrieb koppelbar ist, und wobei der zumindest eine Tangentialkraftaufnahmezylinder (21) hydraulisch mit dem Vorratskreis (46) und dem Ausdehnungsgefäß (36) verbindbar ist.
**gekennzeichnet dadurch, dass**
i) die Parkbremseinrichtung (20) einen Nachstellkolben (23b) aufweist, der in dem Tangentialkraftaufnahmezylinder (21) bei Nachführung des zumindest einen Bremsbelages (3, 3') hydraulisch verstellbar ist.

2. Scheibenbremse (1) nach Anspruch 1, **dadurch gekennzeichnet, dass** ein Stellantriebsrad (17) mit einem mit der Schraubspindel (12) gekoppelten Wellenantriebsrad (16) einen hydraulischen Zahnradmotor (19) bildet, welcher mit dem elektromotorische Aktuator (30) hydraulisch über einen Hydraulikschalter (44) koppelbar ist.

3. Scheibenbremse (1) nach Anspruch 2, **dadurch gekennzeichnet, dass** der Hydraulikschalter (44) von der Steuereinheit (27) steuerbar ist.

4. Scheibenbremse (1) nach einem der vorhergehenden Ansprüche, **dadurch gekennzeichnet, dass** die verstellbare Schraubspindel (12) in dem zumindest einen Zuspannzylinder (11) angeordnet ist.

5. Scheibenbremse (1) nach einem der vorhergehenden Ansprüche, **dadurch gekennzeichnet, dass** die Steuereinheit (27) eine Steuerscheibe aufweist, welche von dem elektromotorischen Aktuator (30) über ein Umschaltventil (38) hydraulisch von einem Steuerantrieb (28) in Ausbildung als hydraulischer Zahnradmotor antreibbar ist.

6. Scheibenbremse (1) nach einem der vorhergehenden Ansprüche, **dadurch gekennzeichnet, dass** die Parkbremseinrichtung (20) mit einer Notlöseeinrichtung (18) versehen ist, welche mit dem Stellantriebsrad (17) gekoppelt ist.

7. Scheibenbremse (1) nach einem der vorhergehenden Ansprüche, **dadurch gekennzeichnet, dass** die zumindest eine Kraftübertragungseinheit (7) mit dem zumindest einen Bremsbelag (3, 3') über eine keilförmige Auflagereinrichtung (5) mit einer überkritischen Winkelform in Wirkverbindung steht.

8. Scheibenbremse (1) nach einem der vorhergehenden Ansprüche, **dadurch gekennzeichnet, dass** der Nachstellkolben (23b) zur Nachführung mit dem Vorratskreis (46) über ein Richtungsventil (59) verbindbar ist.

9. Scheibenbremse (1) nach einem der Ansprüche 2 bis 8, **dadurch gekennzeichnet, dass** die Parkbremseinrichtung (20) mittels des elektromotorischen Aktuators (30) lösbar ist, wobei gleichzeitig zum einen über den Stufenkolben (32) eine hohe hydraulisch erzeugte Zuspannkraft entsteht, während gleichzeitig der hydraulische Zahnradmotor (19) ein Lösemoment der Schraubspindeln (12) zum Lösen der Bremse erzeugt.

10. Scheibenbremse (1) nach einem der vorhergehenden Ansprüche, **dadurch gekennzeichnet, dass** eine horizontale Auslenkung des zumindest einen Bremsbelags (3, 3') infolge immer weiteren Zuziehens aufgrund eines überkritischen Keilwinkels mechanisch ohne Auftreten einer Überbeanspruchung begrenzt ist, wobei ein hohe Bremskraft erzeugt ist.

## Claims

1. Disc brake (1) of the self-energizing type, comprising:
a) a hydraulic system internal in the brake, which is provided with a reservoir circuit (46) and an expansion tank (36);
b) a brake application device including at least one brake application cylinder (11) for applying at least one brake lining (3, 3') in a direction towards a brake disc (1);
c) at least one power transmitter unit (7) supporting said at least one brake lining (3, 3') at a wedge angle on said brake application device;
d) at least one cylinder (21) receiving a tangential force for the changeover of the wedge angle, that is operatively connected to said at least one power transmitter unit (7);
e) an electromotive actuator (30) that acts on said brake application device via said hydraulic system;
f) a distributor cylinder (31) for the amplification of the pressure, which is disposed in series between said electromotive actuator (30) and said brake application device; and
g) a controller unit (27) that is disposed between said cylinder receiving a tangential power (21) and said electromotive actuator (30) for control of the change-over of the wedge angle,
h) a parking brake means (20) provided with an adjustable screw spindle (12) for adjustment of said at least one brake lining (3, 3'), with said adjustable screw spindle (12) being adapted for coupling to said electromotive actuator (30) for driving, and wherein said at least one cylinder receiving a tangential force (21) is adapted to be hydraulically communicated with said reservoir circuit (46) and said expansion tank (36),
**characterised in**
(i) that said parking brake means (20) comprises an adjustment piston (23b) that is hydraulically adjustable in said cylinder receiving a tangential force (21) in the course of tracking of said at least one brake lining (3, 3').

2. Disc brake (1) according to Claim 1, **characterised in that** an adjustment driving wheel (17) interacts with a shaft driving wheel (16), which is coupled to said screw spindle (12) so as to form a hydraulic toothed-wheel motor (19) that is adapted to be hydraulically coupled via a hydraulic switch (44) to said electromotive actuator (30)..

3. Disc brake (1) according to Claim 2, **characterised in that** said hydraulic switch (44) is controllable by said controller unit (27).

4. Disc brake (1) according to any of the preceding Claims, **characterised in that** said adjustable screw spindle (12) is disposed in said at least one brake application cylinder (11).

5. Disc brake (1) according to any of the preceding Claims, **characterised in that** said controller unit (27) comprises a control disc that is adapted for being hydraulically driven from said electromotive actuator (30) via a change-over valve (38) by a control actuator (28) in the form of a hydraulic toothed-wheel motor.

6. Disc brake (1) according to any of the preceding Claims, **characterised in that** said parking brake means (20) is provided with an emergency release means (18) that is coupled to said adjustment driving wheel (17).

7. Disc brake (1) according to any of the preceding Claims, **characterised in that** said at least one power transmitter unit (7) is operatively connected to said at least one brake lining (3, 3') via a wedge-shaped supporting means (5) having an hypercritical angle shape.

8. Disc brake (1) according to any of the preceding Claims, **characterised in that** adjustment piston (23b) is adapted to be connected to said reservoir circuit (46) via a directional valve (59) for tracking.

9. Disc brake (1) according to any of the Claims 2 to 8, **characterised in that** said parking brake means (20) is adapted to be released by means of said electromotive actuator (30), with a high hydraulically generated brake application force being produced, on the one hand, at the same time via said differential piston, whereas, at the same time, said hydraulic toothed-wheel motor (19) generates a release momentum of said screw spindles (12) for brake release.

10. Disc brake (1) according to any of the preceding Claims, **characterised in that** a horizontal deflection of said at least one brake lining (3, 3') is mechanically restricted, without occurrence of overload, due to an ongoing tightening caused by a hypercritical wedge angle, with a high braking force being generated thereby.

## Revendications

1. Frein à disque du type à auto-renforcement, comprenant
a) un système hydraulique à un circuit réservoir (46) et à un réservoir d'expansion (36), qui se trouve à l'intérieur dans le frein ;
b) un dispositif de serrage à au moins un cylindre de serrage (11) à serrer au moins une garniture de frein (3, 3') en un sens vers un disque de frein (1) ;
c) au moins une unité de transmission de force (7), qui appuie ladite au moins une garniture de frein (3, 3') à un angle de calage audit dispositif de serrage ;
d) au moins un cylindre (21) récepteur d'une force tangentielle pour la commutation de l'angle de calage, qui comprend un piston à plots de réception et qui se trouve en connexion fonctionnelle à ladite au moins une unité de transmission de force (7) ;
e) un actionneur électromoteur (30), qui agit sur ledit dispositif de serrage via ledit système hydraulique ;
f) un cylindre distributeur (31) pour le renforcement de la pression, qui est disposé, en série, entre ledit actionneur électromoteur (30) et ledit dispositif de serrage ;
g) une unité de contrôle (27), qui est disposée entre ledit cylindre récepteur de force tangentielle (21) et ledit actionneur électromoteur (30) pour la commande de la commutation de l'angle de calage, et
h) un moyen de freinage de stationnement (20) à une tige filetée ajustable (12) pour l'ajustement de ladite au moine une garniture de frein (3, 3'), dans lequel ladite tige filetée ajustable (12) est apte à être accouplée audit actionneur électromoteur (30) pour son entraînement, et dans lequel ledit au moins un cylindre récepteur d'une force tangentielle (21) est apte à être relié, de manière hydraulique, audit circuit réservoir (46) et ledit réservoir d'expansion (36),
caractérisé en ce
(i) que ledit moyen de freinage de stationnement (20) comprend un piston de rattrapage (23b), qui est hydrauliquement ajustable dans ledit cylindre récepteur de force tangentielle (21) au cours du rattrapage de ladite au moins une garniture de frein (3, 3').

2. Frein à disque (1) selon la revendication 1, **caractérisé en ce qu'**une roue motrice de rattrapage (17) coopère avec une roue motrice de l'arbre (16), qui est accouplée à ladite tige filetée (12), en formant un moteur à engrenages hydraulique (19), qui est apte à être accouplé hydrauliquement via un commutateur hydraulique (44) audit actionneur électromoteur (30)..

3. Frein à disque (1) selon la revendication 2, **caractérisé en ce que** ledit commutateur hydraulique (44) est commandable par ladite unité de contrôle (27).

4. Frein à disque (1) selon la revendication 2, **caractérisé en ce que** ladite tige filetée ajustable (12) set disposée dans ledit au moins un cylindre de serrage (11).

5. Frein à disque (1) selon une quelconque des revendications précédentes, **caractérisé en ce que** ladite unité de contrôle (27) comprend un disque de réglage qui est apte à être entraîné hydrauliquement à partir dudit actionneur électromoteur (30) via une soupape de commutation (38) par une unité motrice de contrôle (28) sous forme d'un moteur hydraulique à engrenages

6. Frein à disque (1) selon une quelconque des revendications précédentes, **caractérisé en ce que** ledit moyen de freinage de stationnement (20) est muni d'un moyen de desserrage d'urgence (18), qui est accouplé à ladite roue motrice de réglage (17).

7. Frein à disque (1) selon une quelconque des revendications précédentes, **caractérisé en ce que** ladite au moins une unité de transmission de force (7) se trouve en connexion opérationnelle avec ladite au moins une garniture de frein (3, 3') via un moyen d'appui en forme de coin (5) à une forme d'angle hypercritique.

8. Frein à disque (1) selon une quelconque des revendications précédentes, **caractérisé en ce que** ledit piston de rattrapage (23b) pour la poursuite est apte à être relié audit circuit réservoir (46) via une soupape directionnelle (59).

9. Frein à disque (1) selon une quelconque des revendications 2 à 8, **caractérisé en ce que** ledit moyen de freinage de stationnement (20) est desserrable moyennant ledit actionneur électromoteur (30), en créant, en même temps, une grande force de serrage, engendrée de manière hydraulique, via ledit piston à plots (32), d'en côté, pendant, que, d'autre côté, ledit moteur à engrenages hydraulique (19 engendre, en même temps, un moment de desserrage desdites tiges filetées (12) pour le desserrage du frein.

10. Frein à disque (1) selon une quelconque des revendications précédentes, **caractérisé en ce que** grâce au serrage de plus en plus en vertu d'un angle de calage hypercritique, une déflection horizontale de ladite au moins une garniture de frein (3, 3') est mécaniquement restreinte, sans l'occurrence d'une sur-contrainte, en engendrant une grande force de freinage.
